# EUROPEAN PATENT SPECIFICATION

(11) **EP 1 764 298 B1**
(45) Date of publication and mention of the grant of the patent: **19.03.2008**
(21) Application number: 06010557.4
(22) Date of filing: 22.05.2006
(51) Int. Cl.: B62M 25/04, B62K 23/06

(54) **Bicycle gear shifting operation device**
Fahrradgetriebewechselgerät
Dispositif de changement de vitesse pour bicyclette

(30) Priority: 14.09.2005 JP 2005267225
(43) Date of publication of application: 21.03.2007
(73) Proprietor: SHIMANO INC., Osaka 590-8577 (JP)
(72) Inventor: Miki, Yoshimitu, Sakai Osaka 590-8577 (JP); Ose, Kenji, Sakai Osaka 590-8577 (JP)
(74) Representative: Hofmann, Harald

(56) References cited:
- EP-A2- 1 232 940
- US-A- 5 676 022

## Description

### [Technical Field]

The present invention relates to a gear shifting operation device, and more particularly to a bicycle gear shifting operation device that is mounted to a frame of a bicycle for performing a gear shifting operation for switching among a plurality of gear shifting positions of a gear shifting device connected by a gear shifting cable.

### [Background Art]

Some bicycles include a gear shifting device such as an internal gear shifting device or an external gear shifting device. For a gear shifting operation of such a gear shifting device, a gear shifting operation device connected to the gear shifting device via a gear shifting cable has been used. A conventionally known gear shifting operation device is of an operation member type including a winding operation member and a releasing operation member. As the gear shifting operation device of the operation member type, a technique for swingably operating the winding operation member and the releasing operation member in the same direction (for example, see Japanese Patent No. JP2088384) and a technique for swingably operating the operation members in different directions (for example, see Japanese Patent No. JP4183696) are known. In the former conventional technique, the winding operation member and the releasing operation member are operated in a direction of being pressed with a thumb to cause a gear shifting cable to be wound or released for gear shifting. In the latter conventional technique, the winding operation member is operated in a direction of being pressed with a thumb to cause a gear shifting cable to be pulled in a winding direction on a step-by-step basis for gear shifting, and the winding operation member is operated in a direction of being pressed with an index finger to cause the gear shifting cable to return in a releasing direction for gear shifting.

A bicycle gear shifting operation device according the preamble of claim 1 is known from the document US 5 676 022 A.

### [Disclosure of the Invention]

### [Problems to be Solved by the Invention]

In both the conventional techniques, the operating direction of the winding operating member is the direction of being pressed with the thumb. The operating direction of the releasing operating member is the same direction as the winding operating member in the former technique, and a different direction from the winding operating member in the latter technique. The operating directions of the winding operating member and the releasing operating member are sometimes desired to be changed according to rider's preference. For both the conventional techniques, however, the operating direction of the operating member is limited to a fixed direction and cannot be suited to the rider's preference.

An object of the present invention is to provide a bicycle gear shifting operation device having an operating member that can suit an operating direction of the operating member to rider's preference.

### [Means for Solving the Problems]

A bicycle gear shifting operation device according to the invention 1 includes: a mounting portion mountable to a bicycle; a cable locking unit; a position holding and releasing mechanism; and a first operating member. The cable locking unit is mounted to the mounting portion movably along a first plane in a cable pulling direction and a cable releasing direction. The position holding and releasing mechanism includes a positioning unit having a plurality of positioning teeth, and a positioning pawl that is moved along a surface parallel to the first plane between an engaging position for engagement with the positioning teeth and a releasing position for release from the positioning teeth, and selectively holds the cable locking unit in any one of a plurality of holding positions corresponding to a plurality of gear shifting positions. The first operating member is mounted to the mounting portion movably in a first direction and a second direction, and operates the positioning pawl of the position holding and releasing mechanism according to the movement in the first direction and the second direction to move the cable locking unit in the cable releasing direction.

In the gear shifting operation device, when the first operating member is moved in any of the first direction and the second direction, the positioning pawl is operated along the surface parallel to the first plane to move the cable locking unit in the cable releasing direction. Here, the cable locking unit can be moved in the cable releasing direction by the movement of the first operating member in any of the first direction and the second direction, and thus an operating direction of the operating member can be suited to rider's preference. Also, the cable locking unit and the positioning pawl are placed in parallel, which can make the gear shifting operation device compact.

For the bicycle gear shifting operation device according to the invention 2, in the device according to the invention 1, the first operating member has a neutral position, and is moved in the first direction and the second direction from the neutral position. In this case, a cable releasing operation can be performed by operating the first operating member in any direction from the neutral position.

For the bicycle gear shifting operation device according to the invention 3, in the device according to the invention 2, the first operating member includes an input member movable in the first direction and the second direction, and a driving member that is moved by the input member to move the positioning pawl from the engaging position to the releasing position. In this case, the driving member can move the positioning pawl from the engaging position to the releasing position by moving the input member in any of the first direction and the second direction.

For the bicycle gear shifting operation device according to the invention 4, in the device according to the invention 3, the input member is tiltable in a plurality of directions including the first direction and the second direction from the neutral position, and the driving member includes a link member that connects the input member and the positioning pawl to move the positioning pawl to the releasing position according to the tilt of the input member. In this case, the cable releasing operation can be performed via the link member by tilting the input member in any of the plurality of directions.

For the bicycle gear shifting operation device according to the invention 5, in the device according to the invention 3, the input member and the driving member are integrally formed, the driving member has two operation portions placed with a space therebetween, and any of the operations of the first operating member in the first direction and the second direction causes the operation portions to move the positioning pawl to the releasing position. In this case, the driving member and the input member are integrally formed, and the two operation portions are provided to move the positioning pawl in the two directions, thereby simplifying a configuration of the first operating member.

For the bicycle gear shifting operation device according to the invention 6, in the device according to any of the inventions 1 to 5, the position holding and releasing mechanism further includes a continuous rotation preventing pawl that is moved along the surface parallel to the first plane between a contacting position for engagement with the positioning teeth in a position different from the positioning pawl and a separating position for separation from the positioning teeth, moved to the contacting position when the positioning pawl is placed in the releasing position, and moved to the separating position when the positioning pawl is placed in the engaging position. In this case, even if the positioning pawl is placed in the releasing position by the continuous rotation preventing pawl, the continuous rotation preventing pawl prevents the positioning unit from being excessively moved in the cable releasing direction.

For the bicycle gear shifting operation device according to the invention 7, in the device according to any of the inventions 1 to 6, the continuous rotation preventing pawl and the positioning pawl are integrally formed. In this case, the positioning pawl and the continuous rotation preventing pawl can be achieved with simple configurations.

The bicycle gear shifting operation device according to the invention 8, in the device according to any of the inventions 1 to 7, further comprises a second operating member that is movably mounted to the mounting portion, and operates the position holding and releasing mechanism according to the movement to move the cable locking unit in a cable winding direction. In this case, the cable locking unit can be also moved in the cable winding direction by the second operating member.

### [Advantages of the Invention]

According to the present invention, the cable locking unit can be moved in the cable releasing direction by the movement of the first operating member in any of the first direction and the second direction, and thus an operating direction of the operating member can be suited to rider's preference. Also, the cable locking unit and the positioning pawl are placed in parallel, which can make the gear shifting operation device compact.

### [Best Mode for Carrying Out the Invention]

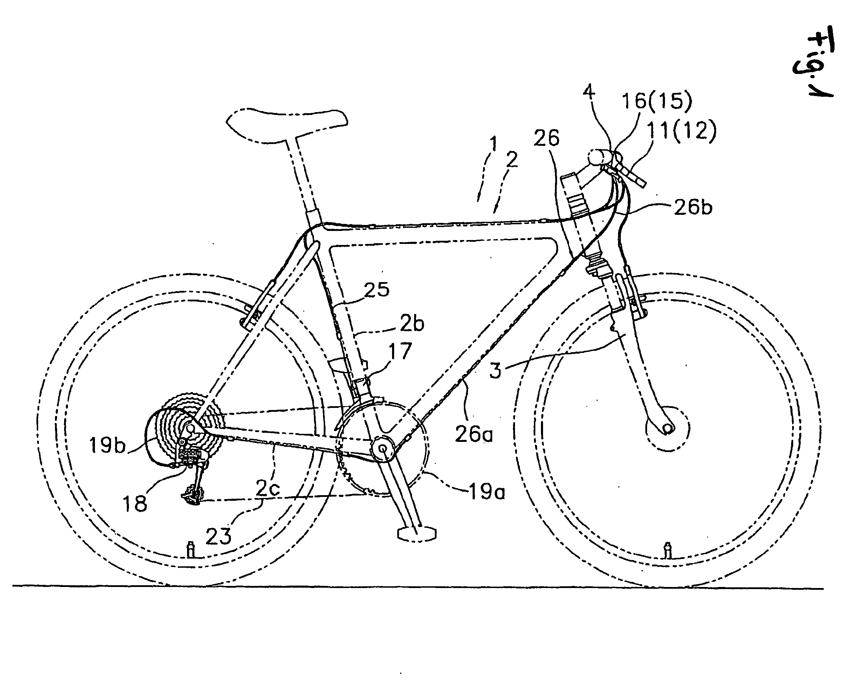

In Figure 1, a bicycle 1 including an embodiment of the present invention includes a frame 2 having a suspension fork 3 and a handlebar 4 secured to an upper portion of the suspension fork 3. A front derailleur 17 that constitutes an exterior gear shifting device is mounted to the middle of the frame 2, and a rear derailleur 18 is mounted to a rear end of the frame 2. The front derailleur 17 is placed, for example, in a lower portion of a seat tube 2b of the frame 2, and guides a chain 23 to any of sprockets of a front chain wheel 19a having, for example, three sprockets. The rear derailleur 18 is placed in a rear end of a chain stay 2c of the frame 2, and guides the chain 23 to any of sprockets of a rear chain wheel 19b having, for example, eight sprockets. The front derailleur 17 and the rear derailleur 18 are connected to front and rear gear shifting operation portions (an example of a gear shifting operation device) 15 and 16 via front and rear gear shifting cables 25 and 26.

The front and rear gear shifting operation portions 15 and 16 are placed inside and near brake levers 12 and 11 in the handlebar 4. The front gear shifting operation portion 15 and the rear gear shifting operation portion 16 are related as object and mirror image, and configurations and operations thereof are substantially the same except the number of gear shifting stages. Thus, the rear gear shifting operation portion 16 will be described below for the description of the configuration and the operation.

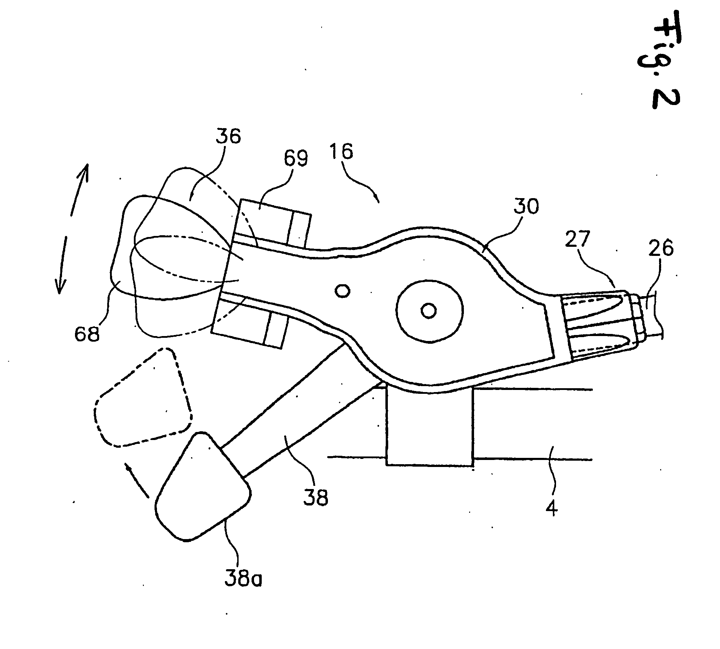

As shown in Figure 2, the rear gear shifting operation portion 16 includes a mounting portion 30 mountable to the handlebar 4 inside the front brake lever 11. In Figure 2, the rear gear shifting operation portion 16 is seen from below. The mounting portion 30 may be integrally secured to a bracket of the front brake lever 11.

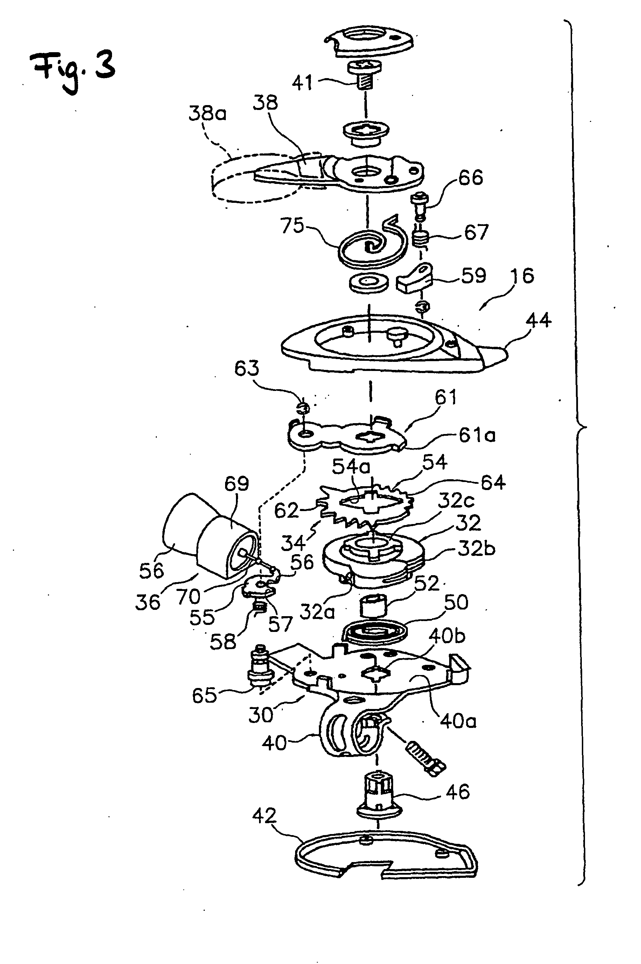

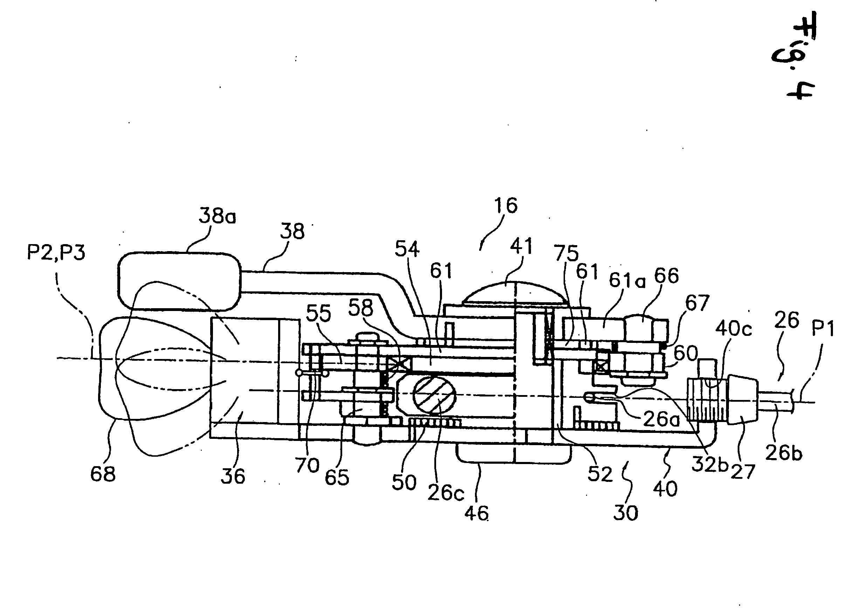

As shown in Figure 3 and Figure 4, the rear gear shifting operation portion 16 includes a winding unit 32 (an example of a cable locking unit) mounted to the mounting portion 30 movably in a cable pulling direction and a cable releasing direction of the rear gear shifting cable 26, a position holding and releasing mechanism 34 that selectively holds the winding unit 32 in any one of a plurality of holding positions corresponding to a plurality of gear shifting positions of the rear derailleur 18, a first operating member 36 for a cable releasing operation, and a second operating member 38 for a cable winding operation.

As shown in Figure 3 to Figure 5, the mounting portion 30 includes a bracket 40, for example, made of a metal plate mountable to the handlebar 4 by a fastening bolt, an upper cover 42 mounted to a lower portion of the bracket 40, and a lower cover 44 mounted to an upper portion of the bracket 40. The bracket 40 has a plane 40a on which the winding unit 32 is placed, and an opening 40b in which a rotation shaft 46 is nonrotatably mounted. The rotation shaft 46 passes through the opening 40b of the bracket 40 and extends upward. A tip of the rotation shaft 46 is secured by a securing bolt 41 to secure the second operating member 38. The bracket has a female screw 40c into which an outer locking portion 27 for locking an outer casing 26b (Figure 1) of the rear gear shifting cable 26 is screwed.

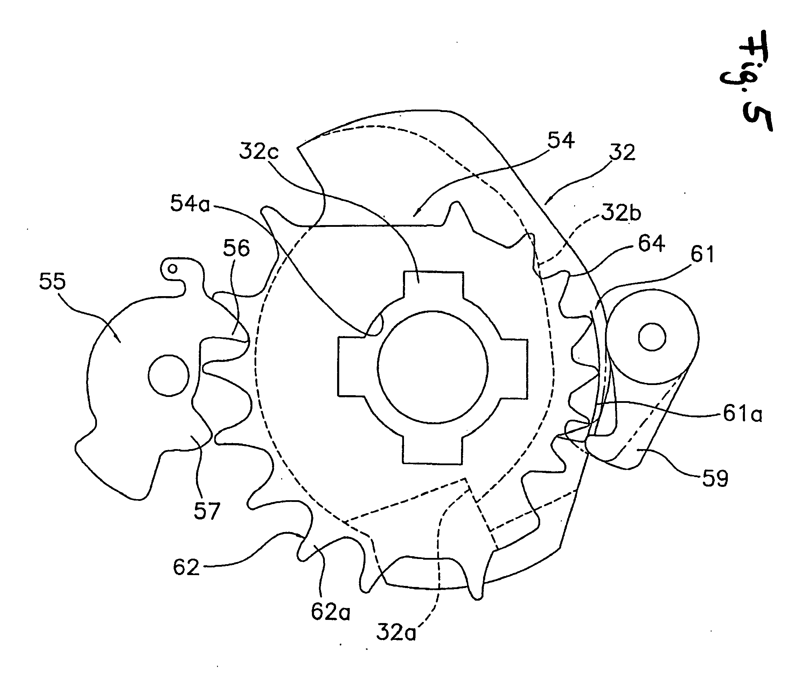

The winding unit 32 is movable along a first plane (P1) parallel to the plane 40a of the bracket 40. Specifically, the winding unit 32 is mounted to the rotation shaft 46 via a bush 52 movably (rotatably) in a cable winding direction and the cable releasing direction. The winding unit 32 includes, in an outer peripheral surface thereof, an inner locking portion 32a that locks a cable nipple 26c secured to a tip of an inner cable 26a (Figure 1) of the rear gear shifting cable 26, and a cable winding groove 32b for winding the inner cable 26a. The winding unit 32 is urged in the cable releasing direction (counterclockwise in Figure 5) by a spring member 50 such as a torsion coil spring. The spring member 50 has one end locked to the winding unit 32 and the other end locked to the bracket 40 described later. In an upper surface of the winding unit 32, an engaging protrusion 32c is formed that is interlocked with and rotate a positioning unit 54 described later of the position holding and releasing mechanism 34.

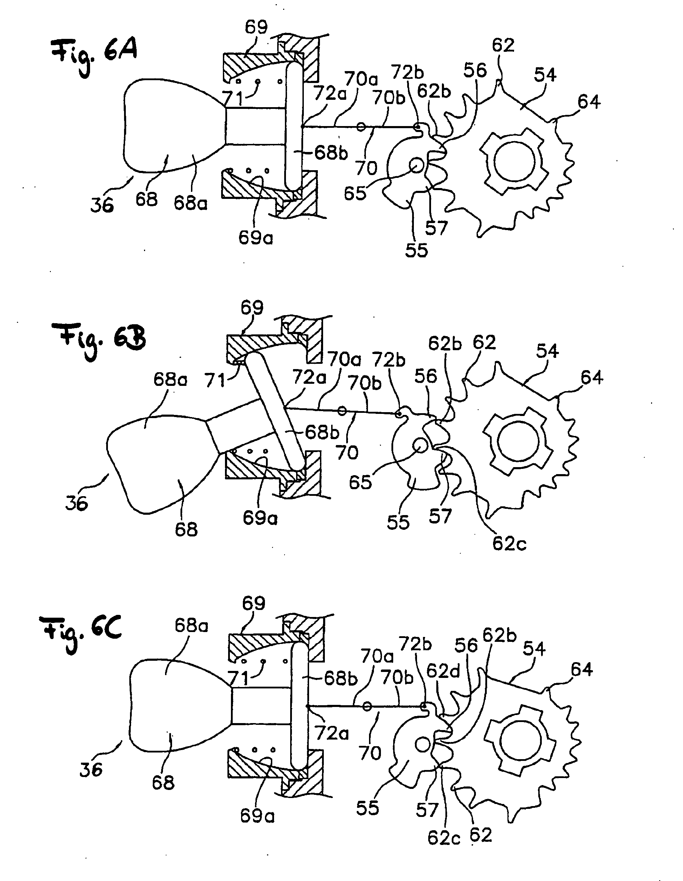

The position holding and releasing mechanism 34 includes the positioning unit 54 that has, for example, eight positioning teeth 62 and eight advance teeth 64 and is interlocked with the winding unit 32, and a positioning pawl 56 that is moved along a surface (P2) parallel to the first plane between an engaging position in Figure 6A for engagement with the positioning teeth 62 and a releasing position in Figure 6B for release from the positioning teeth 62. The position holding and releasing mechanism 34 includes a continuous rotation preventing pawl 57 that is moved along a surface (P3) parallel to the first plane between a contacting position in Figure 6B for engagement with the positioning teeth 62 in a position different from the positioning pawl 56 and a separating position in Figure 6A for separation from the positioning teeth 62, an advance pawl 59 that is moved between an advance position for engagement with the advance teeth 64 shown by a dash-double-dot line in Figure 5 and a releasing position for separation shown by a solid line in Figure 5, and a holding plate 61 nonrotatably mounted to the rotation shaft 46.

The positioning unit 54 has an engaging hole 54a that engages the engaging protrusion 32c of the winding unit 32, and is integrally moved with the winding unit 32. The positioning teeth 62 and the advance teeth 64 are provided of the numbers corresponding to the number of gear shifting positions of the rear derailleur 18, and formed in an outer peripheral surface of the positioning unit 54 so as to radially protrude. The positioning unit 54 is urged in the cable releasing direction (counterclockwise in Figure 5) together with the winding unit 32 by the spring member 50. The positioning teeth 62 and the advance teeth 64 are spaced based on the amount of movement of the cable set according to the gear shifting positions of the rear derailleur 18.

The positioning pawl 56 and the continuous rotation preventing pawl 57 are integrally formed in a swing unit 55 swingably mounted to a swing shaft 65 standing on the bracket 40. The swing unit 55 is urged clockwise in Figure 5 by a spring member 58 such as a torsion coil spring so that the positioning pawl 56 is placed in the engaging position. The positioning pawl 56 comes into contact with a locking surface 62a of the positioning teeth 62 and prevents the positioning unit 56 urged counterclockwise from being rotated in the cable releasing direction. As shown in Figure 6B, when moved to the contacting position, the continuous rotation preventing pawl 57 comes into contact with a positioning tooth 62c downstream in the cable releasing direction by one of a positioning tooth 62b with which the positioning pawl 56 has been in contact, and prevents the positioning unit 54 from being continuously rotated in the cable releasing direction at a stroke after the positioning pawl 56 is separated. When the continuous rotation preventing pawl 57 is placed in the contacting position, the positioning pawl 56 is placed in a position passing over the positioning tooth 62b that the positioning pawl 56 has engaged as shown in Figure 6B.

The advance pawl 59 is swingably mounted to a swing shaft 66 standing on the second operating member 38. The advance pawl 59 is urged clockwise in Figure 5 by a spring member 67 such as a torsion coil spring so that the advance pawl 59 is placed in the advance position.

The holding plate 61 is nonrotatably mounted to the rotation shaft 46 and secured to an upper end of the swing shaft 65 by a snap ring 63. The holding plate 61 has an abutting portion 61a for placing the advance pawl 59 in the releasing position when the second operating member 38 is placed in an operation start position described later so as to protrude toward the advance pawl 59. Thus, the advance pawl 59 is always placed in the releasing position when the second operating member 3 8 is placed in the operation start position. Then, when the second operating member 38 is operated from the operation start position to an operation finish position and a tip of the advance pawl 59 exceeds the abutting portion 61 a, the advance pawl 59 is urged by a spring member 67 and swings toward the advance position.

The first operating member 36 includes an input member 68 movable in a plurality of directions including the first direction and the second direction shown by dash-double-dot lines in Figure 2 and Figure 4, and a driving member 70 that is moved by the input member to move the positioning pawl 56 from the engaging position to the releasing position. As shown in Figure 6, the input member 68 is a joystick-shaped member, and has a knob 68a and a disk portion 68b formed in a base of the knob 68a. An outer peripheral surface of the disk portion 68b is formed by a curved surface having a semicircular section. A periphery of the disk portion 68b is covered with a case member 69 secured to the bracket 40. A bowl-shaped guide surface 69a having an arcuate section that tiltably guides the disk portion 68b is formed inside the case member 69. The input member 68 is urged toward the neutral position in Figure 6A by a spring member 71 in the form of a coil spring placed in the case member 69 and placed in a compressed manner between the disk portion 68b and a tip of the guide surface 69a, and is tiltable in, for example, four directions including the first direction and the second direction from the neutral position.

The driving member 70 includes a first link member 70a connected to the middle of the disk portion 68b of the input member 68 by a universal joint 72a, and a second link member 70b rotatably connected to the first link member 70a. The second link member 70b is connected to the swing unit 55 via a universal joint 72b.

For the first operating member 36 with such a configuration, the knob 68a of the input member is tilted in one direction by hand to cause the disk portion 68b to swing around a base of the guide surface 69a. When the disk portion 68b swings, the driving member 70 connected to the middle thereof is pulled to cause the swing unit 55 to swing counterclockwise in Figure 6, and move the positioning pawl 56 from the engaging position to the releasing position. When the operation is stopped and the hand is released, the input member 68 is returned to the neutral position by the spring member 71. At this time, the swing unit 55 is urged so that the positioning pawl 56 is placed in the engaging position by the spring member 58, and thus the swing unit 55 swings clockwise to again place the positioning pawl 56 in the engaging position.

As shown in Figure 2 and Figure 3, the second operating member 38 is mounted to the rotation shaft 46 swingably to the operation start position shown by a solid line in Figure 2 and the operation finish position shown by a dash-single-dot line. The second operating member 38 is urged toward the operation start position by a spring member 75 such as a spiral spring. The knob 38a is provided in one end of the second operating member 38. The swing shaft 66 that supports the advance pawl 59 stands on the side of the other end of the first operating member 38 with the center of swing therebetween.

The front gear shifting operation portion 15 and the rear gear shifting operation portion 16 are related as object and mirror image and have the same structure, and the front gear shifting operation portion 15 is provided inside the rear brake lever 12.

Next, a gear shifting operation of the rear gear shifting operation portion 16 will be described.

An operation in the cable releasing direction is as described below.

As shown in Figure 6A to Figure 6C, when the knob 68a of the input member 68 of the first operating member 36 is operated, the disk portion 68b swings around the base of the guide surface 69a. When the disk portion 68b swings, the driving member 70 connected to the middle thereof is pulled, the swing unit 55 swings counterclockwise in Figure 6A from a state where the positioning pawl 56 is placed in the engagement position in Figure 6A, and the positioning pawl 56 is moved from the engaging position to the releasing position in Figure 6B and separated from the positioning unit 54. Thus, the positioning unit 54 is urged in the cable releasing direction by the spring member 50, and thus the positioning unit 54 is rotated in the cable releasing direction. When the positioning pawl is moved to the releasing position, however, the continuous rotation preventing pawl 57 integrally formed with the positioning pawl 56 in the swing unit 55 is moved to the contacting position. Thus, the positioning unit 54 is stopped in a position where the positioning pawl 56 passes over the positioning tooth 62b that the positioning pawl 56 has engaged. In this state, when the operation is stopped and the hand is released from the knob 68a, the input unit 68 is returned to the neutral position by the spring member 71. At this time, the swing unit 55 is urged so that the positioning pawl 56 is placed in the engaging position by the spring member 58, and thus the swing unit 55 swings clockwise as shown in Figure 6C to again place the positioning pawl 56 in the engaging position. Thus, the positioning unit 54 is rotated in the cable releasing direction by one tooth of the positioning teeth 62 and stopped, and the winding unit 32 is also rotated in the cable releasing direction by one gear shifting position.

Here, the winding unit 32 can be moved in the cable releasing direction by the movement of the first operating member 36 in any of the first direction and the second direction, and thus the operating direction of the first operating member 36 can be suited to rider's preference. Also, the winding unit 32 and the positioning pawl 56 are placed in parallel, which can make the gear shifting operation portion 16 compact.

The operation in the cable winding direction is as described below.

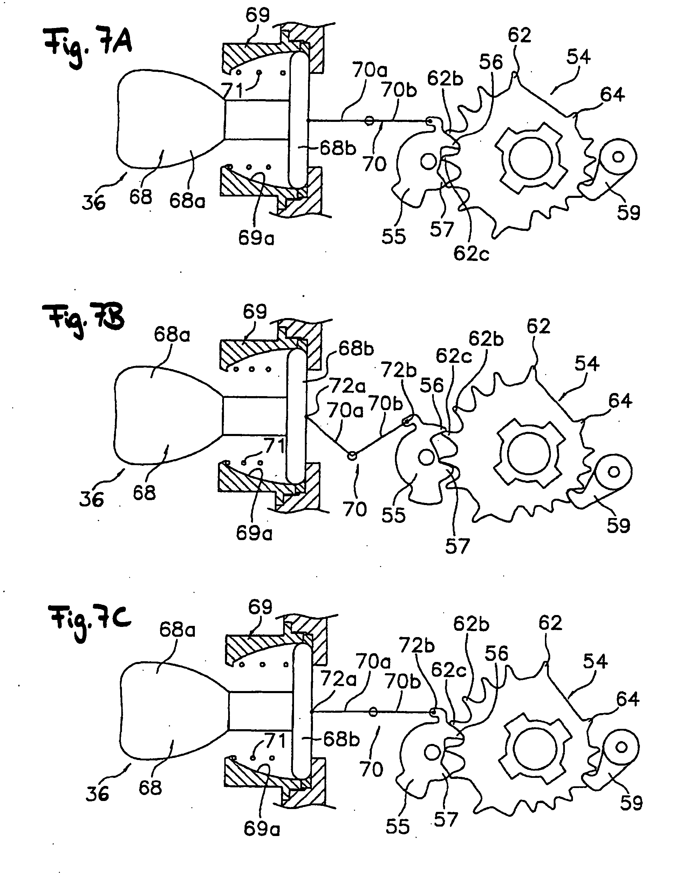

When the second operating member 38 is operated from the operation start position toward the operation finish position, the advance pawl 59 is urged by the spring member 67 and moved to the advance position to engage the advance teeth 64 as shown in Figure 7A at the time of the tip of the advance pawl 59 passing through the abutting portion 61. Thus, the swing of the second operating member 38 causes the positioning unit 54 to be rotated in the cable winding direction (clockwise in Figure 5). The positioning pawl 56 is placed in the engaging position until the positioning unit 54 is rotated, and is pressed by the positioning tooth 62c next to the positioning tooth 62b positioned and moved toward the releasing position according to the swing of the second operating member 38 as shown in Figure 7B. At this time, the first and second link members 70a and 70b of the driving member 70 are bent at connecting portions and sag to prevent the input member 68 from being moved. When the second operating member 38 is further caused to swing toward the operation finish position, the positioning tooth 62c passes over the positioning pawl 56, and the positioning pawl 56 is moved to the engaging position with the positioning tooth 62c as shown in Figure 7C. Thus, the positioning unit 54 is rotated in the cable winding direction by one tooth of the positioning teeth 62 and stops, and the winding unit 32 is also rotated in the cable winding direction by one gear shifting position. When the second operating member 38 is further caused to swing toward the operation finish position from the state in Figure 7C, the same operations as in Figures 7A to 7C are repeated, and the winding unit can be further rotated in the cable winding direction by one tooth.

### <Other embodiments>

(a) In the above described embodiment, the position holding and releasing mechanism 34 is configured to shift gears on a tooth-by-tooth basis of the positioning teeth 62 with one operation, but the position holding and releasing mechanism may change a plurality of holding positions of the winding unit with one operation of the first operating member at least in any one of the first direction and the second direction. In this case, the plurality of positions can be changed with one operation, thereby facilitating a cable releasing operation for a plurality of gear shifting positions.
(b) In the above described embodiment, the input member and the driving member of the first operating member are separated, but may be integrated.

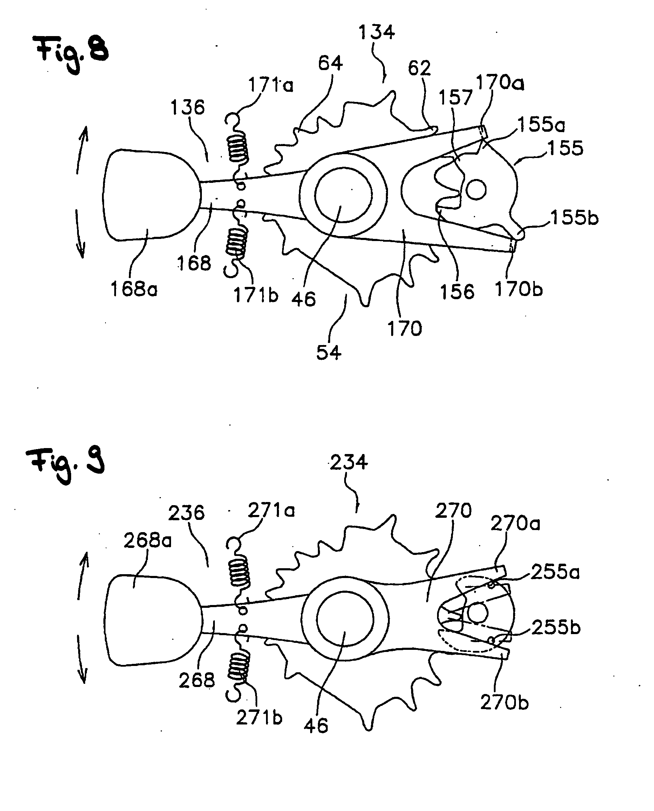

In Figure 8, a first operating member 136 of a position holding and releasing mechanism 134 is rotatably supported by a rotation shaft 46, and is swingable in a first direction, for example, clockwise, and a second direction, counterclockwise from a neutral position. The first operating member 136 is urged to the neutral position by two spring members 171 a and 171 b such as coil springs. The first operating member 136 includes an input member 168, and a driving member 170 placed on the opposite side of the input member 168 with the rotation shaft 46 therebetween and integrally formed with the input member 168. The input member 168 has a knob 168a. The driving member 170 has two operation portions 170a and 170b placed in forked tips with a space therebetween. The operation portions 170a and 170b are bent toward a swing unit 155. The swing unit 155 includes a positioning pawl 156 and a continuous rotation preventing pawl 157, and a pair of engaging portions 155a and 155b that engage the operation portions 170a and 170b, respectively. The swing unit 155 is urged so that the positioning teeth 156 are placed in an engaging position.

For the position holding and releasing mechanism 134 with such a configuration, when the first operating member 136 is operated in a first (or second) direction shown by an arrow, the operation portion 170a (or 170b) comes into contact with an outer periphery of the engaging portion 155a (or 155b) to cause the swing unit 155 to swing counterclockwise. Then, when the operation is stopped, the first operating member 136 is returned to the neutral position, and a positioning unit 54 is rotated in a cable releasing direction by one tooth as in the above described embodiment.

In Figure 9, an input member 268 of a first operating member 236 has the same structure as the input member in Figure 8. A driving member 270 has a pair of arm-shaped operation portions 270a and 270b. A swing unit 255 has a pair of engaging pins 255a and 255b in addition to a positioning pawl 256 and a continuous rotation preventing pawl 257. The engaging pins 255a and 255b are formed to protrude toward the operation portions 270a and 270b so as to engage inner side surfaces of the operation portions 270a and 270b, respectively.

For the position holding and releasing mechanism 234 with such a configuration, when the first operating member 236 is operated in a first (or second) direction shown by an arrow, the operation portion 270a (or 270b) comes into contact with an outer peripheral surface of the engaging pin 255a (or 255b) to cause the swing unit 255 to swing counterclockwise. Then, when the operation is stopped, the first operating member 236 is returned to the neutral position, and a positioning unit 54 is rotated in a cable releasing direction by one tooth as in the above described embodiment.

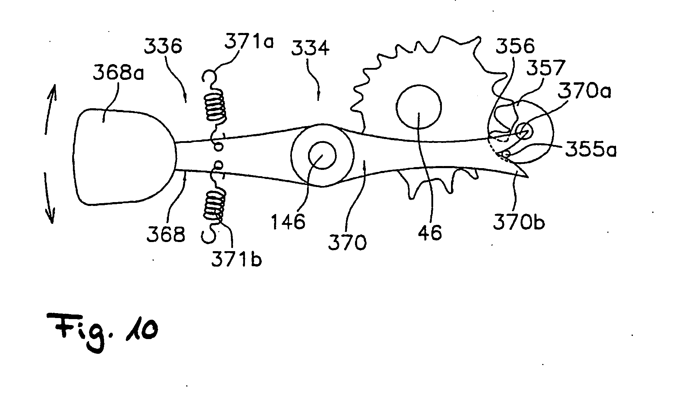

In Figure 10, an input member 368 of a first operating member 336 has the same structure as the input member in Figure 8, but the first operating member 336 is swingably mounted to a rotation shaft 146 placed radially outward of a positioning unit 54 instead of the rotation shaft 46. A driving member 370 has a pair of operation portions 370a and 370b having arcuate shapes and formed to be forked. A swing unit 355 has one engaging pin 355a in addition to a positioning pawl 356 and a continuous rotation preventing pawl 357. The engaging pin 355 is formed to protrude toward the operation portions 370a and 370b so as to engage both the operation portions 370a and 370b.

For the position holding and releasing mechanism 334 with such a configuration, when the first operating member 336 is operated in a first (or second) direction shown by an arrow, the operation portion 370a (or 370b) comes into contact with an outer peripheral surface of the engaging pin 355a to cause the swing unit 355 to swing counterclockwise. Then, when the operation is stopped, the first operating member 336 is returned to the neutral position, and a positioning unit 54 is rotated in a cable releasing direction by one tooth as in the above described embodiment.

Such structures including the input member and the driving member integrally formed are not limited to the above described three embodiments.
(c) In the above described embodiment, the gear shifting operation device of the exterior gear shifting device including the front derailleur and the rear derailleur is exemplified, but the present invention may be applied to a gear shifting operation device of an interior gear shifting device having an internal gear shifting hub.
(d) In the above described embodiment, the mounting portion 30 of the rear gear shifting operation portion 16 is separated from the rear brake lever 12, but the mounting portion may be integrally secured to the bracket of the brake lever.
(e) In the above described embodiment in which the input member and the driving member are separated, the driving member has the two link members, but may have a tensionable and releasable member such as a wire or a rope instead of the link member.

### [Brief Description of the Drawings]

[Figure 1] A side view of a bicycle to which an embodiment of the present invention is mounted.
[Figure 2] A bottom view of a rear gear shifting operation portion according to the embodiment of the present invention.
[Figure 3] A schematic exploded perspective view thereof.
[Figure 4] A vertical sectional view thereof.
[Figure 5] An enlarged plan view of a positioning unit, a positioning pawl, and an advance pawl.
[Figure 6A] A schematic view of a cable releasing operation.
[Figure 6B] A schematic view of the cable releasing operation.
[Figure 6C] A schematic view of the cable releasing operation.
[Figure 7A] A schematic view of a cable winding operation.
[Figure 7B] A schematic view of the cable winding operation.
[Figure 7C] A schematic view of the cable winding operation.
[Figure 8] A view of another embodiment corresponding to Figure 6A.
[Figure 9] A view of a further embodiment corresponding to Figure 6A.
[Figure 10] A view of a further embodiment corresponding to Figure 6A.

### [Description of Symbols]

- 15 and 16: front and rear gear shifting operation portions
- 30: mounting portion
- 32: winding unit (an example of a cable locking portion)
- 34: position holding and releasing mechanism
- 36, 136, 236, 336: first operating member
- 38: second operating member
- 54: positioning unit
- 54: positioning pawl
- 57: continuous rotation preventing pawl
- 68, 168, 268, 368: input member
- 70, 179, 270, 370: driving member
- 70a and 70b: first and second link members
- 170a, 170b, 270a, 270b, 370a, 370b: operation portion

## Claims

1. A bicycle gear shifting operation device comprising:
a mounting portion mountable to a bicycle;
a cable locking unit mounted to said mounting portion movably along a first plane in a cable pulling direction and a cable releasing direction;
a position holding and releasing mechanism that includes a positioning unit having a plurality of positioning teeth (62), and a positioning pawl (56) that is moved along a surface parallel to said first plane between an engaging position for engagement with said positioning teeth (62) and a releasing position for release from said positioning teeth (62), and selectively holds said cable locking unit in any one of a plurality of holding positions corresponding to a plurality of gear shifting positions; and **characterized in that**
a first operating member (36) that is mounted to said mounting portion movably in a first direction and a second direction, and operates said positioning pawl (56) of said position holding and releasing mechanism according to the movement in said first direction and said second direction to move said cable locking unit in said cable releasing direction.

2. The bicycle gear shifting operation device according to claim 1, wherein said first operating member (36) has a neutral position, and is moved in said first direction and said second direction from said neutral position.

3. The bicycle gear shifting operation device according to claim 2, wherein said first operating member (36) includes an input member (68) movable in said first direction and said second direction, and a driving member (70) that is moved by said input member to move said positioning pawl (56) from said engaging position to said releasing position.

4. The bicycle gear shifting operation device according to claim 3, wherein said input member (68) is tiltable in a plurality of directions including said first direction and said second direction from said neutral position, and said driving member (70) includes a link member (70a; 70b) that connects said input member (68) and said positioning pawl (56) to move said positioning pawl (56) to said releasing position according to the tilt of said input member (68).

5. The bicycle gear shifting operation device according to claim 3, wherein said input member (68) and said driving member (70) are integrally formed, said driving member has two operation portions placed with a space therebetween, and any of the operations of said first operating member (36) the first direction and the second direction causes said operation portions to move said positioning pawl (56) to said releasing position.

6. The bicycle gear shifting operation device according to any one of claims 1 to 5, wherein said position holding and releasing mechanism further includes a continuous rotation preventing pawl (57) that is moved along the surface parallel to said first plane between a contacting position for engagement with said positioning teeth (62) in a position different from said positioning pawl (56) and a separating position for separation from said positioning teeth (62), moved to said contacting position when said positioning pawl (56) is placed in said releasing position, and moved to said separating position when said positioning pawl (56) is placed in said engaging position.

7. The bicycle gear shifting operation device according claim 6, wherein said continuous rotation preventing pawl (57) and said positioning pawl (56) are integrally formed.

8. The bicycle gear shifting operation device according to any one of claims 1 to 7, further comprising a second operating member (38) that is movably mounted to said mounting portion, and operates said position holding and releasing mechanism according to the movement to move said cable locking unit in said cable winding direction.

## Patentansprüche

1. Fahrradgangschaltbetätigungsvorrichtung, umfassend:
einen Montageabschnitt, der an ein Fahrrad montierbar ist;
eine Kabelverriegelungseinheit, die an den Montageabschnitt montiert ist, beweglich entlang einer ersten Ebene in einer Kabelziehrichtung und einer Kabellösrichtung;
einen Positions-Halte- und -Lösmechanismus, umfassend eine Positioniereinheit, aufweisend eine Vielzahl von Positionierzähnen (62), und eine Positionierklinke (56), die bewegt wird entlang einer Fläche parallel zu der ersten Ebene zwischen einer Eingriffsposition zum Eingriff mit den Positionierzähnen (62) und einer Lösposition zum Lösen von den Positionierzähnen (62), und wahlweise haltend die Kabelverriegelungseinheit in irgendeiner einer Vielzahl von Haltepositionen entsprechend einer Vielzahl von Gangschaltpositionen; **gekennzeichnet durch**
ein erstes Betätigungsteil (36), das an den Montageabschnitt montiert ist, beweglich in einer ersten Richtung und einer zweiten Richtung, und die Positionierklinke (56) des Positions-Halte- und -Lösmechanismus gemäß der Bewegung in der ersten Richtung und der zweiten Richtung betätigt, um die Kabelverriegelungseinheit in der Kabellösrichtung zu bewegen.

2. Fahrradgangschaltbetätigungsvorrichtung gemäß Anspruch 1, wobei das erste Betätigungsteil (36) eine neutrale Position aufweist und in der ersten Richtung und der zweiten Richtung von der neutralen Position bewegt wird.

3. Fahrradgangschaltbetätigungsvorrichtung gemäß Anspruch 2, wobei das erste Betätigungsteil (36) ein Eingabeteil (68), das in der ersten Richtung und der zweiten Richtung beweglich ist, und ein Antriebsteil (70) umfasst, das durch das Eingabeteil bewegt wird, um die Positionierklinke (56) von der Eingriffsposition zu der Lösposition zu bewegen.

4. Fahrradgangschaltbetätigungsvorrichtung gemäß Anspruch 3, wobei das Eingabeteil (68) in einer Vielzahl von Richtungen neigbar ist, einschließlich der ersten Richtung und der zweiten Richtung von der neutralen Position, und das Antriebsteil (70) ein Kopplungsteil (70a; 70b) umfasst, das das Eingabeteil (68) und die Positionierklinke (56) verbindet, um die Positionierklinke (56) zu der Lösposition gemäß der Neigung des Eingabeteils (68) zu bewegen.

5. Fahrradgangsschaltbetätigungsvorrichtung gemäß Anspruch 3, wobei das Eingabeteil (68) und das Antriebsteil (70) integral ausgebildet sind, wobei das Antriebsteil zwei Betätigungsabschnitte umfasst, die mit einem dazwischen liegenden Raum platziert sind, und jedwede der Betätigungen des ersten Betätigungsteils (36) in der ersten Richtung und der zweiten Richtung die Betätigungsabschnitte veranlasst, dass sich die Positionierklinke (56) zu der Lösposition bewegt.

6. Fahrradgangschaltbetätigungsvorrichtung gemäß einem der Ansprüche 1 - 5, wobei der Positions-Halte- und -Lösmechanismus des Weiteren eine kontinuierliche Rotationsverhinderungsklinke (57) umfasst, die bewegt wird entlang der Fläche parallel zu der ersten Ebene zwischen einer Kontaktierposition zum Eingriff mit den Positionierzähnen (62) bei einer Position, die sich von der Positionierklinke (56) unterscheidet, und einer Separierposition zur Separierung von den Positionierzähnen (62), bewegt wird zu der Kontaktierposition, wenn die Positionierklinke (56) bei der Lösposition platziert ist, und bewegt wird zu der Separierposition, wenn die Positionierklinke (56) bei der Eingriffsposition platziert ist.

7. Fahrradgangschaltbetätigungsvorrichtung gemäß Anspruch 6, wobei die kontinuierliche Rotationsverhinderungsklinke (57) und die Positionierklinke (56) integral ausgebildet sind.

8. Fahrradgangschaltbetätigungsvorrichtung gemäß einem der Ansprüche 1 - 7, des Weiteren umfassend ein zweites Betätigungsteil (38), das beweglich an dem Montageabschnitt montiert ist und den Positions-Halte- und -Lösmechanismus gemäß der Bewegung betätigt, um die Kabelverrieglungseinheit in der Kabelwickelrichtung zu bewegen.

## Revendications

1. Dispositif d'actionnement de changement de vitesse d'une bicyclette comprenant:
une partie de montage qui peut être montée sur une bicyclette ;
une unité de blocage de câble, montée sur la partie de montage, mobile le long d'un premier plan dans une direction de tirage de câble et une direction de libération de câble ;
un mécanisme de libération et de maintien de position, qui comprend une unité de positionnement ayant une pluralité de dents de positionnement (62), et un cliquet de positionnement (56) qui se déplace le long d'une surface parallèle au premier plan, entre une position d'engagement pour un engagement avec les dents de positionnement (62), et une position de libération, pour une libération des dites dents de positionnement (62), et qui tient sélectivement l'unité de blocage de câble dans n'importe quelconque d'une pluralité de positions de maintien correspondant à une pluralité de positions de changement de vitesse ; et **caractérisé en ce que**
un premier élément d'actionnement (36) est monté sur la partie de montage, mobile dans une première direction et dans une deuxième direction, et actionne le cliquet de positionnement (56) du mécanisme de maintien et de libération de position selon le mouvement dans la première direction et la deuxième direction, pour bouger l'unité de blocage de câble dans la direction de libération de câble.

2. Dispositif d'actionnement de changement de vitesse de bicyclette selon la revendication 1, dans lequel le premier élément d'actionnement (36) a une position neutre, et il se déplace dans la première direction et dans la deuxième direction à partir de la position neutre.

3. Dispositif d'actionnement de changement de vitesse de bicyclette selon la revendication 2, dans lequel le premier élément d'actionnement (36) comprend un élément d'entrée (68), qui peut se déplacer dans la première direction et dans la deuxième direction, et un élément de transmission (70) qui est déplacé par l'élément d'entrée, pour déplacer le cliquet de positionnement (56) de la position d'engagement vers la position de libération.

4. Dispositif d'actionnement de changement de vitesse de bicyclette selon la revendication 3, dans lequel l'élément d'entrée (68) peut être incliné dans une pluralité de directions, y compris la première direction et la deuxième direction à partir de la position neutre, et l'élément de transmission (70) comprend un organe de liaison (70a ; 70b), qui relie l'élément d'entrée (68) et le cliquet de positionnement (56), pour déplacer le cliquet de positionnement (56) vers la position de libération, selon l'inclinaison de l'élément d'entrée (68).

5. Dispositif d'actionnement de changement de vitesse de bicyclette selon la revendication 3, dans lequel l'élément d'entrée (68) et l'élément de transmission (70) sont formés d'un seul bloc, l'élément de transmission à deux parties d'actionnement avec un espace entre les deux, et n'importe laquelle des opérations de l'organe d'actionnement (36) dans la première direction et dans la deuxième direction amène les parties d'actionnement à déplacer le cliquet de positionnement (56) vers la position de libération.

6. Dispositif d'actionnement de changement de vitesse de bicyclette selon l'une quelconque des revendications 1 à 5, dans lequel le mécanisme de libération et de maintien de position comprend, en outre, un cliquet pour empêcher une rotation continue (57), qui se déplace le long de la surface parallèle au premier plan, entre une position de contact pour un engagement avec les dents de positionnement (62) dans une position différente du cliquet de positionnement (56) et une position de séparation pour une séparation des dents de positionnements (62), qui se déplace vers la position de contact lorsque le cliquet de positionnement (56) est placé dans la position de libération, et qui se déplace dans la position de séparation lorsque le cliquet de positionnement (56) est placé dans la position d'engagement.

7. Dispositif d'actionnement de changement de vitesse de bicyclette selon la revendication 6, dans lequel le cliquet pour empêcher une rotation continue (57) et le cliquet de positionnement (56) sont formés d'un seul bloc.

8. Dispositif d'actionnement de changement de vitesse de bicyclette selon l'une quelconque des revendications 1 à 7, comprenant en outre un deuxième élément d'actionnement (38), qui est monté mobile sur la partie de montage, et qui actionne le mécanisme de libération et de maintien de position, selon le mouvement, pour déplacer l'unité de blocage de câble dans la direction d'enroulement de câble.
